**Europäisches Patentamt**

**European Patent Office**

**Office européen des brevets**

(19)

(11) Veröffentlichungsnummer: **0 164 321**
**B1**

(12) ## EUROPÄISCHE PATENTSCHRIFT

(45) Veröffentlichungstag der Patentschrift:
**14.09.88**

(51) Int. Cl.⁴: **H 02 H 9/08**

(21) Anmeldenummer: **85850084.6**

(22) Anmeldetag: **11.03.85**

(54) Anordnung zur Begrenzung des Erdschlussstromes in Starkstromnetzen.

(30) Priorität: **12.03.84 SE 8401365**

(43) Veröffentlichungstag der Anmeldung:
**11.12.85 Patentblatt 85/50**

(45) Bekanntmachung des Hinweises auf die Patenterteilung:
**14.09.88 Patentblatt 88/37**

(84) Benannte Vertragsstaaten:
**AT BE CH DE FR GB IT LI NL**

(56) Entgegenhaltungen:
**DE - C - 740 198**

**"Soviet Inventions Illustrated", Week E 16, 2 June 1982, Section X 13**

(73) Patentinhaber: **Winter, Klaus, Kantelevägen 12, S-19635 Kungsängen (SE)**

(72) Erfinder: **Winter, Klaus, Kantelevägen 12, S-19635 Kungsängen (SE)**

(74) Vertreter: **Petré, Urban et al, AB STOCKHOLMS PATENTBYRA Box 3129, S-103 62 Stockholm (SE)**

ACTORUM AG

## Beschreibung

Drehstromhochspannungsnetze dienen der Übertragung und Verteilung elektrischer Energie über weite Räume. Bei Isolationsdurchbrüchen sowohl zwischen den Phasen des Systemes als auch gegen Erde oder geerdete Anlagenteile können erhebliche Energiemengen freigesetzt werden.

Grundsätzlich unterscheiden sich Einphasenerdschlüsse von Mehrphasenfehlern dadurch, dass die Gefahr an der Fehlerstelle bei Erdschlüssen durch eine systematische Erhöhung der Nullimpedanz begrenzt werden kann. Waldemar Petersen erkannte diese Möglichkeit bereits 1917. Mit der von Petersen vorgeschlagenen Spule im Sternpunkt des Systemes konnten einphasige Lichtbogenüberschläge ohne Versorgungsunterbrechung zum Selbstlöschen gebracht werden.

Die Mehrzahl der heute installierten Petersenspulen werden durch Umschalten der Wicklung auf den erforderlichen Reaktanzwert eingestellt. Da diese Umschaltung nur in Stufen möglich ist, bleibt in der Regel ein nichtkompensierter Erdschlussreststrom an der Fehlerstelle nach. Eine genauere Einstellung, die mit stufenlos regelbaren Tauchkernspulen möglich wäre, ist aber wenig sinnvoll, weil die Petersenspule nur die reaktive Komponente des Erdschlussstromes kompensiert.

Neben der reaktiven tritt bei Erdschluss auch eine aktive Komponente an der Fehlerstelle auf. Die aktive Komponente kann abhängig von den Netzverhältnissen erhebliche Werte annehmen. Insbesondere in Netzen, in denen aus unterschiedlichen Gründen bei Erdschluss nicht unmittelbar abgeschaltet wird, ist eine weitestgehende Begrenzung des Reststromes angezeigt.

Vorschläge hierzu sind Gegenstand mehrerer Erfindungen. Eduard Senn schlägt eine Reihe denkbarer Lösungen vor (DE-C 740 198). Das gemeinsame Merkmal dieser und ähnlicher Lösungen ist die Erzeugung des erforderlichen Komplementstromes durch Anschaltung einer entsprechend phasenverschobenen Hilfsspannung zwischen Sternpunkt und Erde.

Der Vorschlag gemäss der SU-A 845 216, der dem Oberbegriff des Patentanspruches entspricht, bedeutet insofern eine Verbesserung der bekannten Lösungen, als hier die beiden Komponenten des Kompensationsstromes mit Hilfe von zwei regelbaren Einphasentransformatoren erzeugt werden. Diese Anordnung eignet sich unter gewissen Voraussetzungen auch zur automatischen Nachregelung im Erdschlussfall. Regelbare Einphasentransformatoren sind Spezialgeräte, die mit erheblichen Kosten verbunden sind. Die Kostenfrage dürfte der praktischen Ausführung des letztgenannten Vorschlages im Wege stehen.

Die im Patentanspruch definierte Anordnung gemäss der Erfindung schafft hier wesentliche Verbesserungen. Zum einen kann der erforderliche Kompensationsstrom stufenlos, d.h. auf seinen genauen Wert, eingestellt werden, und zum anderen kann die Anordnung mit handelsüblichen, d.h. kostengünstigen Drehstrom-Schleifringläufermotoren, realisiert werden.

Moderne Erdschlusslöschspulen werden oftmals mit einer Niederspannungs-Leistungshilfswicklung ausgerüstet. Durch direktes Anschalten an diese Hilfswicklung sind besonders kostengünstige Lösungen auch bei Nachrüstung in bereits vorhandenen Anlagen möglich.

Die Erfindung wird im Ausschluss an folgende Zeichnungen beschrieben:

Fig. 1 zeigt ein Schema für die Kompensation des Erdschlussstromes exemplifiziert mit einem Erdschluss in der T-Phase.

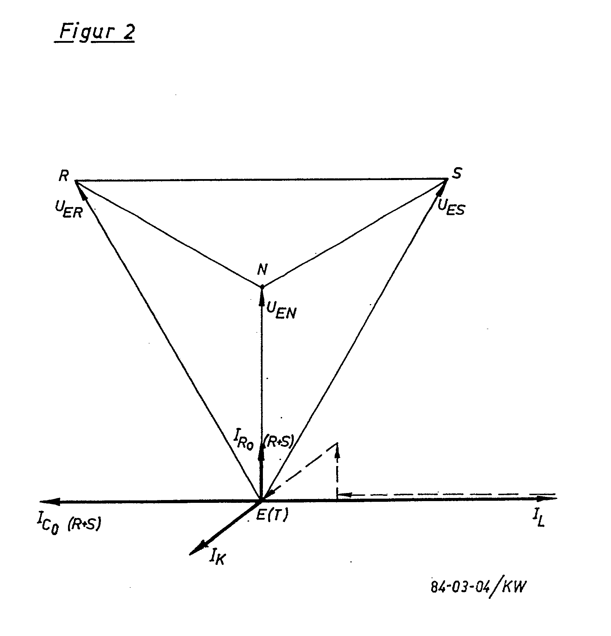

Fig. 2 zeigt das dazugehörige Zeigerdiagramm.

Fig. 3 zeigt ein Ausführungsbeispiel der Erfindung.

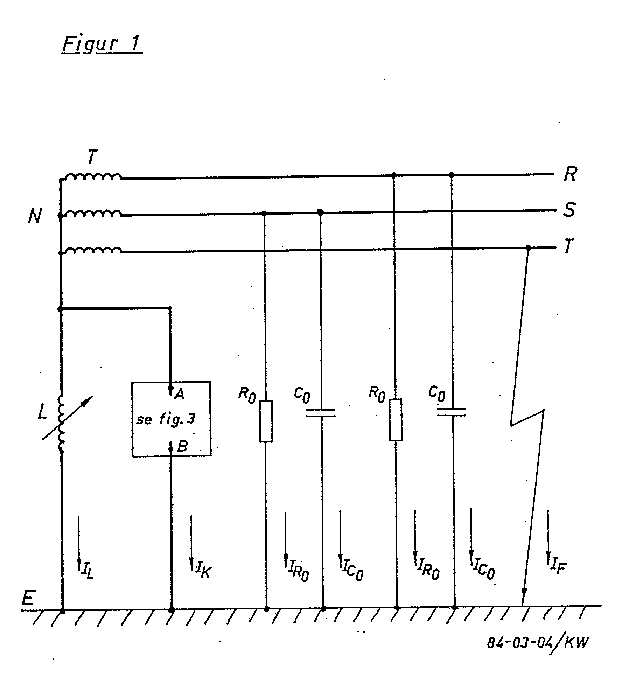

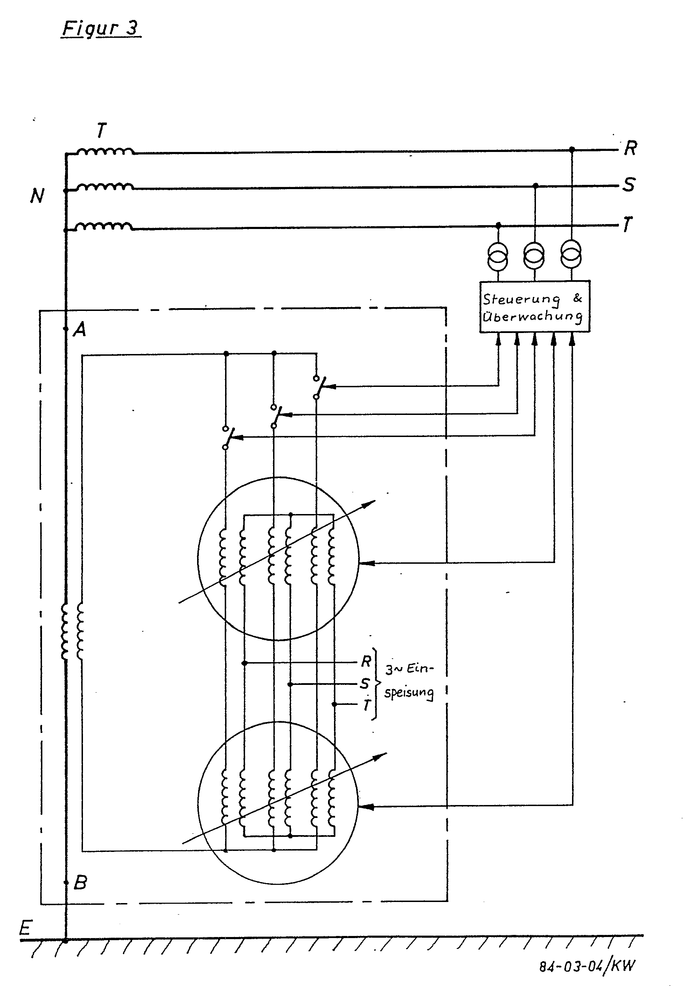

Zur Kompensation des in Figur 1 gezeigten Fehlerstromes ($I_F$) wird im Sternpunkt des einspeisenden Transformators oder einem äquivalenten Punkt des Systemes ein der Erfindung entsprechender Kompensator angebracht. Der Kompensator besteht in der Hauptsache aus zwei regelbaren Drehtransformatoren. Figur 3 zeigt ein dreiphasiges Ausführungsbeispiel. Durch einfaches Verstellen der beiden Drehtransformatoren erhält man drei variable Sekundärspannungen mit einer gleichbleibenden gegenseitigen Phasenverschiebung. Die drei Sekundärspannungen können ihrerseits doch in beliebiger Weise gegen das Hauptsystem phasenverschoben werden.

Bei Erdschluss im Hauptsystem schaltet eine Steuerungs- und Überwachungseinrichtung (Figur 3) die entsprechende Sekundärspannung des Kompensators zwischen Erde und Sternpunkt des Hauptsystemes.

Die Phasenverschiebung und Amplitude der Sekundärspannung des Kompensators soll so gewählt sein, dass dabei der in Figur 1 respektive 2 gezeigte Komplementstrom ($I_K$) über den Kompensator zum Fliessen kommt.

Für die Erfüllung der Kompensationsbedingung ($I_F = 0$)

$$I_K = - (I_L + I_{CO} + I_{RO})$$

sein muss. $I_{CO} + I_{RO}$ ist die Summe der Ableitströme in den beiden fehlerfreien Phasen, $I_L$ der eventuelle Strombeitrag der Petersenspule bei Erdschluss.

Als Drehtransformator kann man mit Vorteil eine handelsübliche Drehstromasynchronmaschine mit Schleifringläufer verwenden. Der Rotor soll dabei in einstellbarer Lage fixierbar sein. Die Phasenverschiebung zwischen Primär- und Sekundärseite wird durch die relative Lage des Rotors im Statorfeld bestimmt.

Durch sekundärseitige Reihen – oder Parallelschaltung zweier solcher Asynchronmaschinen können dann drei Sekundärspannungen erzeugt werden, bei denen ausser der Amplitude auch die Phasenlage stufenlos einstellbar ist. Die gegenseitige Phasenlage der drei Spannungen verbleibt dabei doch konstant 120°.

Es ist prinzipiell unerheblich, ob Rotor- oder Statorwicklung als Primär- respektive Sekundärseite gewählt wird.

Die beiden Drehtransformatoren können von einer beliebigen Hilfsspannungsquelle gespeist werden. Die Frequenz dieses Systemes muss doch mit der des Hauptsystemes übereinstimmen.

Weiterhin kann die Ankopplung der Kompensationseinrichtung an das Hauptsystem in verschiedener Weise geschehen. Bei dem in Figur 3 gezeigten Ausführungsbeispiel geschieht diese Ankopplung über einen Hilfstransformator. Man kann aber auch die Leistungshilfswicklung einer Petersenspule oder eines Sternpunktbildners benutzen.

## Patentanspruch

Anordnung zur Begrenzung von Erdschlussströmen in einem Drehstromnetz mit einem zwischen Netzsternpunkt und Erde geschalteten Kompensator, der im Erdschlussfall einen in bezug auf Amplitude und Phasenlage unabhängig einstellbaren Komplementstrom zur Kompensation der reaktiven und aktiven Komponente des Erdschlussstromes erzeugt, dadurch gekennzeichnet, dass der Kompensator aus zwei regelbaren Drehtransformatoren besteht, die primärseitig aus einer separaten Drehstromquelle gespeist sind.

## Claim

A device for limiting earth leakage currents in a three-phase supply network with a compensator connected between a neutral point in the network and earth, said compensator generating in case of an earth fault a complementary current adjustable independently of amplitude and phase position for compensation of the reactive and active components of the earth leakage current, characterized in that the compensator consists of two controllable three-phase transformers fed on their primary sides by a separate three-phase current source.

## Revendication

Dispositif pour limiter les courants de défaut à la terre dans un réseau triphasé, comportant un compensateur monté entre le point neutre du réseau et la terre, ledit compensateur engendrant, en cas de défaut à la terre, un courant complémentaire réglable de manière indépendante en ce qui concerne l'amplitude et la relation des phases pour compenser les composantes réactive et active du courant de défaut à la terre, caractérisé en ce que ledit compensateur est constitué par deux transformateurs rotatifs réglables alimentés du côté primaire par une source séparée de courant triphasé.

_Figur 1_

84-03-04/KW

Figur 2

84-03-04/KW

7

*Figur 3*

Steuerung &
Überwachung

R
S
T } 3~ Einspeisung

84-03-04/KW

9